# EUROPEAN PATENT SPECIFICATION

(11) **EP 1 217 287 B1**
(45) Date of publication and mention of the grant of the patent: **14.04.2004**
(21) Application number: 99974063.2
(22) Date of filing: 30.09.1999
(51) Int. Cl.: F16L 41/06

(54) **TAPPING INSERT FOR PIPE BRANCHING COLLARS**
ANBOHREINSATZ FÜR ROHRVERZWEIGUNGSKRAGEN
INSERT DE PRISE EN CHARGE POUR COLLERETTES DE RACCORDEMENT DE CONDUITES

(43) Date of publication of application: 26.06.2002
(73) Proprietor: BELGICAST INTERNACIONAL, S.L., 48100 Munguia, Vizcaya (ES)
(72) Inventor: GALFARSORO MADARIAGA, Félix Leya,S.A., E-Munguia, Vizcaya (ES)
(74) Representative: Esteban Perez-Serrano, Maria Isabel
(86) International application number: PCT/ES1999/000307
(87) International publication number: WO 2001/023799

(56) References cited:
- EP-A2- 0 713 047
- US-A- 1 656 280
- US-A- 3 045 706

## Description

### OBJECT OF THE INVENTION

The present invention relates to a pressurised tapping attachment for pipe branching saddles. The attachments have two purposes: on one hand to simplify the actuation of the guillotine which seals the tapping attachment after drilling the main pipe and until the branch pipe is coupled, and on the other to improve tightness or sealing conditions of the slit required to insert the guillotine in the above described operation.

### BACKGROUND OF THE INVENTION

When a pipe must be branched while pressurised, that is while a fluid such as water, gas, etc. continues to flow through it, saddles are generally employed which embrace the pipe at the point where it is to be branched and which are provided with a tapping attachment through which the pipe may be drilled, while maintaining tightness, and the new pipe or branch coupled subsequently.

Said saddle may consist of a steel hoop which embraces the pipe or a pair of clamps which are screwed to each other as a flange. This saddle will in any case be joined to a body, a tapping attachment, which includes on one side a gasket meant to frame the orifice to be made in the main pipe, and on the other side a connection threading for coupling the branch pipe.

Specifically, when the connection is to be performed while pressurised the tapping supplement incorporates a lateral slit, in which a guillotine inserts in order to temporarily seal the orifice made in the main pipe during the removal operation of the perforator drill used to make said orifice in the main pipe, and until the secondary branch pipe is finally installed.

In addition to having means for a right coupling of the branch pipe the tapping attachment employs said means to implant the perforator drill, and incorporates a transverse slit in which moves said guillotine, aided by a gasket, so that in the maximum retraction position of the drill the guillotine can penetrate said slit radially and temporarily seal the branch in order that the drill may be removed and the branch pipe coupled, after which the guillotine is removed and the slit is automatically closed by the elastic recovery of the gasket.

This solution, which is perfectly valid from a theoretical standpoint, in practice presents drawbacks which mainly centre around two aspects:

On one hand, introduction of the guillotine is difficult, as the fluid which flows in the main pipe exerts a considerable pressure on said guillotine, thereby complicating the operation, on top of which is the high pressure generated by the gasket itself when it is deformed, as the gasket must ensure a tight seal after removal of the guillotine.

In addition, in certain conditions this gasket may not ensure a perfect seal, with small fluid leaks taking place though the slit after the branch pipe is installed.

It is known from the state of the art a device for fluid interruption in a fluid pipe such as the one disclosed in EP 7613047 which consists of a set of tubes intended to be assembled over a conduit wherein the set o pipes consists of a coil (9) provided with a flange each other, a seating (10) which is provided with a flange at one end and some clamps (11) joint to the saddle by screws and lean over some ball joints (13), permitting the saddle to joint to the conduit, having at its opposite site a cutting plate , between a first coil (9) flange and the saddle flange and in front of the coil and pivoting over a hole made over a lobe belonging to the saddle flange, the second coil flange being able to receive a suitable drill to make a suitable hole over the conduit.

The main aim of the invention is a pressurized tapping attachment, wherein it is not necessary the use of a set of coils which work in collaboration with a seating. The way in which the guillotine and the attachment interacts is not the best, being one of the aims of the invention among other things to simplify the way in which the guillotine and the attachment works. In the invention the pressurized tapping attachment body comprises a gasket and an internally threaded neck opposite said gasket, with the tapping attachment further incorporating in its middle section a slit having an approximately semicircular extension and incorporating near its ends a transverse pin which acts a hinge pin for a guillotine, wherein said guillotine incorporate on one of its ends a bent protuberance in the forma of a hook for coupling to said pin so that the implantation of guillotine take place by a swiveling motion with a leverage movement.

### DESCRIPTION OF THE INVENTION

The pressurised tapping attachment for pipe branching saddles taught by the invention satisfactorily solves the aforementioned drawbacks in both aspects commented.

According to one embodiment, the slit provided in the tapping attachment incorporates near one of its ends a shaft-like transverse pin which acts as a hinge pin for a bent protuberance provided at the end of the guillotine, which allows the seal to be attained by swivelling said guillotine, as opposed to the linear displacement of conventional guillotines.

Thus, the seal is achieved by a leveraged motion, more quickly, simply and with less effort required, for which purpose the guillotine is provided opposite said bent protuberance with a handle which simplifies its operation.

A second gasket is provided for external sealing of the slit and insertion of the guillotine after the branch pipe is coupled and removal of said guillotine, so that possible fluid leaks through the tapping attachment are prevented, for which purpose this gasket is placed coaxial to the tapping attachment in the slit area and consists of a plastic ring which can deform. This gasket has its end areas slightly narrowed with respect to the tapping diameter, so that it is coupled with a certain elastic deformation and tends to a stable position in its final coupling position, which position is defined by a perimetral lip on the tapping supplement.

### DESCRIPTION OF THE DRAWINGS

The invention will be more clearly understood in view of the accompanying drawings which form an integral part of the description and in which for purposes of illustration only the following is shown:

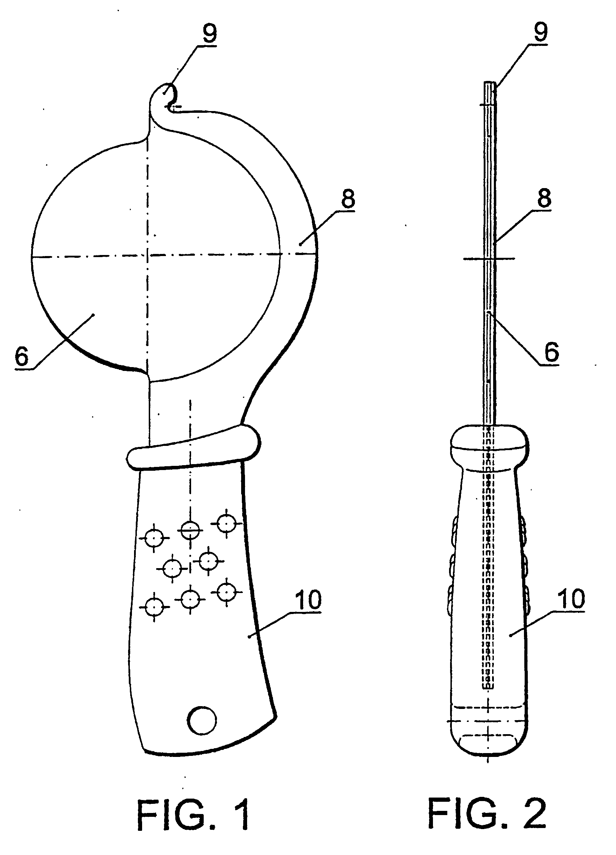

Figure 1, shows a plan view of the guillotine which is part of the pressurised tapping attachment for pipe branching saddles which is the object of the present invention.

Figure 2, shows a profile view of the same guillotine.

Figure 3, shows a plan view similar to that of Figure 1 of the same guillotine in several relative positions from the time when it is coupled to the tapping attachment until the final sealing of said attachment, with the latter shown in cross section at the area of the guillotine coupling slit.

Figure 4, shows a side elevation and sectional view of approximately on quarter of the tapping attachment after it is finally sealed with the aid of the external gasket.

Figure 5, shows, finally, an axial view of the assembly shown in the previous figure.

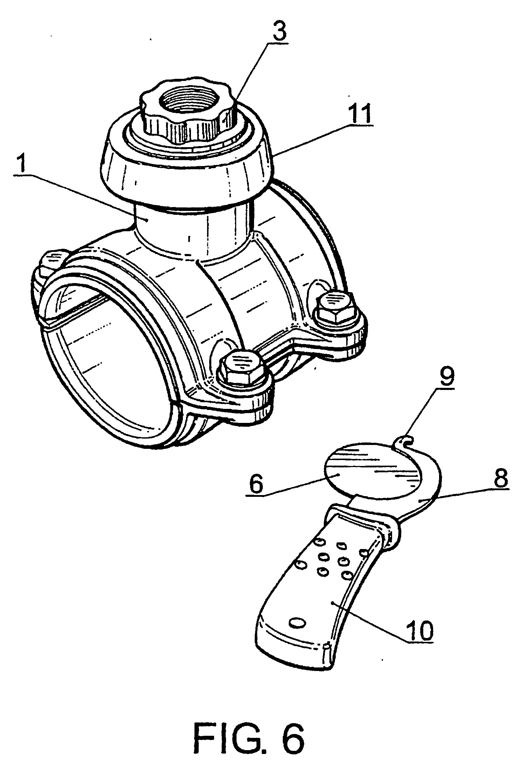

Figure 6, shows a perspective view of the saddle which embrace the pipe incorporating the tapping and pressurising attachment, as well as a perspective view of the guillotine object of the invention.

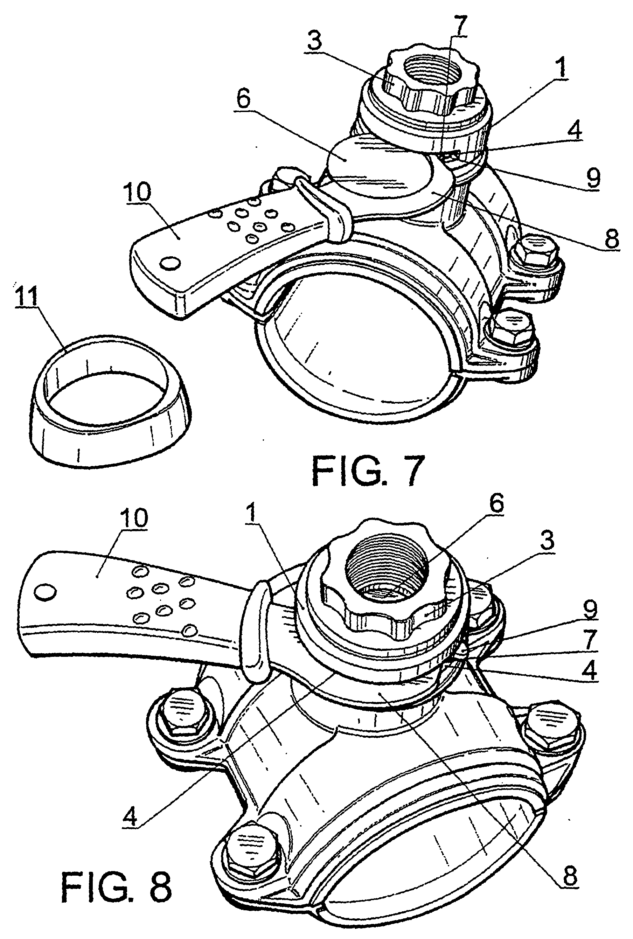

Figure 7, shows a perspective view of the saddle with the tapping and pressurising attachment and the guillotine just before closure. Also shown is a perspective view of the external coupling gasket object of the invention.

Figure 8, shows a perspective view of the saddle with the tapping and pressurising attachment and the guillotine in the closed position.

### PREFERRED EMBODIMENT OF THE INVENTION

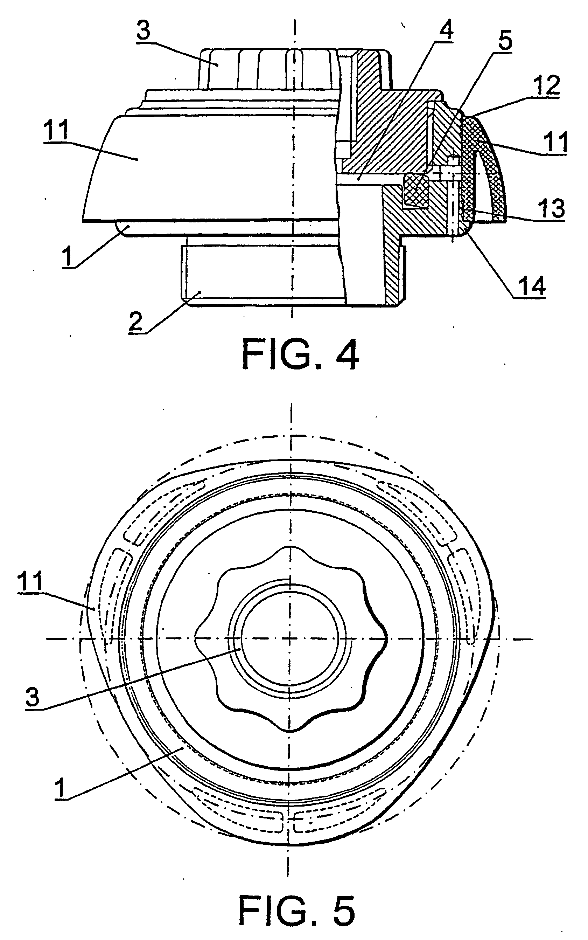

In view of the figures, particularly figures 4 and 5, it can be seen that the tapping attachment disclosed comprises a body (1) in which is defined an externally threaded neck (2) for coupling to flange (15) meant to embrace the main pipe, not shown in the figures, so that said neck (2) screws onto an internally threaded neck of said flange and therefore conforms both the passage for the perforation drill and the later fluid outlet through the tapping attachment. The outer end of body (1) is provided with a second, internally threaded neck (3) which fulfils two functions: receiving the perforator drill during perforation or the main pipe, and later implanting of the secondary pipe of branch. As is also conventional, body (1) is provided in its intermediate segment with a slit (4) along approximately half of its circumference assisted by a gasket (5) which tends to seal said slit and which is meant to allow the temporary coupling of guillotine (6), which is meant to temporarily seal the tapping attachment (1) during removal of the perforator drill and until the branch pipe is attached, thereby preventing fluid leaks during this operation.

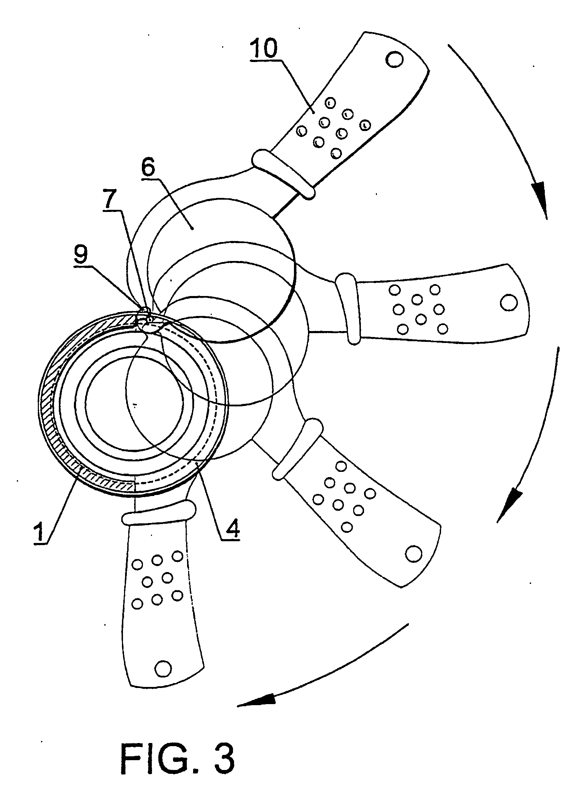

The tapping attachment of the invention centres its characteristics on the fact that said approximately semicircular slit (4) incorporates near one of its ends a transverse pin (7), placed eccentrically, which acts as a support and hinge pin for said guillotine (6), which guillotine is embodied as a clearly disc-shaped element corresponding to label (6), with a diameter so that it can fully block body (1) of the tapping attachment, and having an outer flange (8) on half of said disc shaped element (6) which remains on the outside of body (1). One of the ends of said flange has a bent protrusion (9) for jointed union to pin (7) in the higher position shown in figure 3, while on the other end it is prolonged in a handle (10). Thus, protrusion (9) acts as a locking hook onto pin (7), and from said topmost position of figure (3) the guillotine swivels towards its lowermost position, which fully closed position is arrived at quickly and easily, requiring very little effort due to the particular configuration and handling of said guillotine.

More specifically, the operational procedure is similar to that of any conventional pressurised tapping attachment, so that in it the following stages take place:
- The saddle is first placed embracing the main pipe.
- The perforating drill is then screwed onto neck (3) of tapping attachment (1) and the pipe drilled.
- After drilling the drill bit is removed somewhat until it is above slit (4) provided for the sealing guillotine (6).
- Guillotine (6) is then inserted in the slit with the swivelling method described above, until it reaches the sealing position inside tapping attachment (1).
- The perforating drill is removed.
- The branch is connected by coupling the branch pipe to the threaded neck (3) of the tapping attachment.
- The guillotine (6) is removed with slit (4) remaining sealed by the elastic restoration of gasket (5).

Nevertheless, an additional operational stage is provided which involves placing a second gasket (11) coaxial to body (1) of the tapping attachment, in the area of slit (4), which gasket is a deformable plastic ring and which an inner diameter (12) on its end opposite the main pipe which is smaller than the outer diameter of tapping attachment (1), so that the two are fitted under pressure in this area, In order to further improve the tightness of the opposite end (13) of gasket (11), tapping attachment (1) has a perimetral flange (14) so that there is also a tight fit between the tapping attachment and the gasket, making the latter perfectly stable in its working position, in which it fully seals slit (4), eliminating the risk of fluid leakage which may occur through the conventional inner gasket (12) which also complements slit (4).

## Claims

1. Pressurised tapping attachment for pipe branching saddles, which comprises a clamp coupled perimetrally onto the main pipe, to which is joined a tapping attachment body which rest on said main pipe with a gasket and which incorporates opposite said gasket an internally threaded neck (3) for implementation first of the perforating drill with which an orifice is made on the main pipe, and later attachment of the secondary pipe, with the tapping attachment further incorporating in its mid section a slit (4) meant for introduction of a guillotine (6) which is a temporary sealing means during the removal operation of the branch coupling drill, **characterised in that** said slit (4) for the guillotine (6), which has an approximately semicircular extension, incorporates near one of its ends a transverse pin (7) which acts as a hinge pin for guillotine (6), which guillotine incorporates on one of its ends a bent protuberance (9), in the form of a hook, meant for coupling to said pin, while on its opposite end it has a handle (10), so that the implantation of guillotine (6) takes place by a swivelling motion, with a leveraged movement which requires a minimal effort.

2. Pressurised tapping attachment for pipe branching saddles, as claimed in claim 1, **characterised in that** body (1) of the tapping attachment incorporates a gasket (11) which is coupled axially and externally on said body, embodied as a ring made of plastic material with a certain capacity for deformation with the particular characteristic that said gasket (11) has on its end (12) opposite the main pipe an inner diameter which is smaller than the outer diameter or body (1) of the tapping attachment, while the latter incorporates a perimetral flange (14) on the area which meets gasket (11), which assists a perfect fit of the gasket (11) on tapping attachment (1).

## Patentansprüche

1. Mit Druck beaufschlagte Gewindebohrvorrichtung für Rohrverzweigungsanschlussklemmen, die eine Halterung umfasst, die umfänglich auf dem Hauptrohr angebracht werden, das mit einem Gewindebohrvorrichtungskörper verbunden wird, der auf dem besagten Hauptrohr m it e inem Dichtungsring a ufliegt und d er g egenüber d es b esagten Dichtungsrings einen Gewindehals (3) umfasst, um als erstes den Perforationsbohrer anzuwenden, mit dem ein Loch in das Hauptrohr gemacht wird und danach das Nebenrohr anzubringen mit der Gewindebohrvorrichtung, die ausserdem im mittleren Bereich über einen Schlitz (4) verfügt, um ein Schlagmesser (6) aufzunehmen, das ein vorübergehendes Dichtungsmittel während des Rückzugs Verzweigungsverbindungsbohrers darstellt, **dadurch gekennzeichnet, dass** der besagte Schlitz (4) für das Schlagmesser (6), der eine ungefähr halbkreisförmige Ausführung ausweist, nahe einem seiner Enden über einen Querbolzen (7) verfügt, der als Gelenkbolzen für das Schlagmesser (6) funktioniert, wobei dieses Schlagmesser an einem seiner Enden über einen gebogenen Überstand (9) verfügt in Form eines Hakens zur Verbindung mit besagtem Bolzen, während an dem gegenüberliegenden Ende ein Griff (10) vorgesehen ist, so dass die Anbringung des Schlagmessers (6) durch eine Schwenkbewegung stattfindet, mit einer grossen Bewegung, die nur einen minimalen Kraftauwand benötigt.

2. Mit Druck beaufschlagte Gewindebohrvorrichtung für Rohrverzweigungsanschlussklemmen wie im Anspruch 1 beansprucht, **dadurch gekennzeichnet, dass** der Körper (1) der Gewindebohrvorrichtung über einen Dichtungsring (11) verfügt, der achsial und äusserlich auf den besagten Körper aufgesetzt wird, ausgeführt als ein Ring aus Plastik mit einer gewissen Deformierungskapazität, dadurch besonders gekennzeichnet, dass der besagte Dichtungsring (11) an dem Ende (12), das dem Hauptrohr gegeüberliegt, einen inneren Durchmesser ausweist, der geringer ist als der äussere Durchmesser oder Körper (1) der Gewindebohrvorrichtung, während der letztere im Bereich, der auf den Dichtungsring (11) trifft, über einen umfänglichen Flansch (14) verfügt, womit die perfekte Anpassung des Dichtungsrings (11) auf der Gewindebohrvorrichtung (1) unterstützt wird.

## Revendications

1. Accessoire de taraudage pressurisé pour collerettes de branchement de tuyaux, qui comprend un collier de serrage accouplé périmétralement sur le tuyau principal, auquel est uni un accessoire de taraudage qui repose sur ledit tuyau principal avec un joint d'étanchéité et qui incorpore en regard du joint d'étanchéité un collet taraudé (3) pour la mise en oeuvre en premier lieu du foret perforant avec lequel on fait un orifice dans le tuyau principal, et ensuite de l'accessoire du tuyau secondaire, avec l'accessoire de taraudage qui incorpore en outre à sa demi-section une fente (4) destinée à l'introduction d'une guillotine (6) qui est un moyen d'obturation temporaire pendant l'opération de retrait du foret d'accouplement des branches, **caractérisé en ce que** ladite fente (4) pour la guillotine (6), qui a une extension approximativement semi-circulaire, incorpore près d'une de ses extrémités une broche transversale (7) qui fait l'office d'un axe de charnière pour la guillotine (6), ladite guillotine incorpore sur une de ses extrémités une protubérance (9) cintrée, ayant la forme d'un crochet, destinée à l'accouplement de ladite broche, tandis que sur son extrémité opposée se trouve un manche (10), de manière à réaliser l'implantation de la guillotine (6) par un mouvement pivotant, avec une action de levier qui requiert un effort minimal.

2. Accessoire de taraudage pressurisé pour collerettes de branchement de tuyaux, selon la revendication 1, **caractérisé en ce que** le corps (1) de l'accessoire de taraudage incorpore un joint d'étanchéité (11) qui est accouplé axialement et extérieurement sur ledit corps, incorporé comme un anneau en matière plastique avec une certaine capacité pour la déformation avec la caractéristique particulière que ledit joint d'étanchéité (11) a sur son extrémité (12) en regard du tuyau principal un diamètre intérieur qui est plus petit que le diamètre extérieur ou le corps (1) de l'accessoire de taraudage, tandis que ce dernier incorpore un rebord périmétral (14) sur la zone qui rencontre le joint d'étanchéité (11) qui fournit un assemblage parfait du joint d'étanchéité (11) sur l'accessoire de taraudage (1).
